(19) **Europäisches Patentamt / European Patent Office / Office européen des brevets**

(11) **EP 4 683 377 A1**

(12) # EUROPEAN PATENT APPLICATION
published in accordance with Art. 153(4) EPC

(43) Date of publication:
**21.01.2026 Bulletin 2026/04**

(21) Application number: **24791848.5**

(22) Date of filing: **01.04.2024**

(51) International Patent Classification (IPC):
*H04W 24/10* (2009.01)

(52) Cooperative Patent Classification (CPC):
**H04W 24/10; H04W 28/06**

(86) International application number:
**PCT/CN2024/085169**

(87) International publication number:
**WO 2024/217263 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.04.2023 CN 202310454036**

(71) Applicant: **Huawei Technologies Co., Ltd.
Shenzhen, Guangdong 518129 (CN)**

(72) Inventors:
- **LIU, Chenchen**
  **Shenzhen, Guangdong 518129 (CN)**
- **QIAN, Bin**
  **Shenzhen, Guangdong 518129 (CN)**
- **HUANG, Lei**
  **Shenzhen, Guangdong 518129 (CN)**
- **YANG, Xun**
  **Shenzhen, Guangdong 518129 (CN)**

(74) Representative: **Huawei European IPR
Huawei Technologies Duesseldorf GmbH
Riesstraße 25
80992 München (DE)**

(54) **COMMUNICATION METHOD AND APPARATUS**

(57) A communication method and apparatus are provided, to reduce indication overheads of a channel impulse response tap feedback. The method includes: receiving first indication information, and sending first channel impulse response information based on the first indication information. The first indication information indicates one or more channel impulse response groups that need to be fed back in a channel impulse response window, and each channel impulse response group that needs to be fed back includes a (I)th channel impulse response tap and a (II)th channel impulse response tap that are in the channel impulse response window, and all channel impulse response taps between the (I)th channel impulse response tap and the (II)th channel impulse response tap. $s_1$ and $s_2$ are positive integers, and $t_1$ and $t_2$ are positive integers. The first channel impulse response information is the one or more channel impulse response groups that are indicated by the first indication information and that need to be fed back.

FIG. 4

**Description**

CROSS-REFERENCE TO RELATED APPLICATIONS

This application claims priority to Chinese Patent Application No. 202310454036.6, filed with the China National Intellectual Property Administration on April 17, 2023 and entitled "COMMUNICATION METHOD AND APPARATUS", which is incorporated herein by reference in its entirety.

TECHNICAL FIELD

This application relates to the field of mobile communication technologies, and in particular, to a communication method and apparatus.

BACKGROUND

An ultra-wideband (ultra-wideband, UWB) technology is a wireless carrier communication technology in which a nanosecond-level non-sinusoidal narrow pulse is used for data transmission. Therefore, the ultra-wideband occupies a wide spectrum range. Due to a narrow pulse and extremely low radiation spectrum density of the ultra-wideband, a UWB system has advantages such as a strong multi-path resolution capability, low power consumption, and high confidentiality. The UWB technology can be applied to various communication scenarios.

In an application of a sensing scenario, information like a distance, an angle, and a speed of a target may be extracted by detecting an echo of a UWB signal on the target, to implement target sensing. When a sensing receiver is a receive device of the UWB signal, the sensing receiver needs to transmit a measurement result of a channel impulse response (channel impulse response, CIR) to a sensing transmitter through an air interface, to feed back a sensing result. In a CIR window-based CIR feedback mechanism, the sensing receiver may send, to the sensing transmitter based on an indication of a CIR tap (tap) that needs to be fed back, the CIR tap that is in a CIR window and that needs to be fed back, to feed back the sensing result. Each CIR tap may indicate a sensing result of a specific time granularity in the CIR window. The indication may indicate the CIR tap that needs to be fed back. Therefore, the sensing receiver may send only the CIR tap that needs to be fed back, and does not need to send a CIR tap other than the CIR tap that needs to be fed back, to reduce overheads.

Currently, the sensing transmitter needs to indicate whether each CIR tap in the CIR window needs to be fed back, and indication overheads are high.

SUMMARY

This application provides a communication method and apparatus, to reduce indication overheads of a CIR tap feedback.

According to a first aspect, a communication method is provided. The method may be implemented by a first terminal apparatus. The first terminal apparatus may be a sensing receiver or a component of the sensing receiver. The sensing receiver may be a network device or a terminal device. The component in this application may include, for example, at least one of a chip, a chip system, a processor, a transceiver, a processing unit, or a transceiver unit. For example, an execution body is the first terminal apparatus. The method may be implemented by using the following steps: The first terminal apparatus receives first indication information. The first indication information indicates one or more channel impulse response groups that need to be fed back in a channel impulse response window, and each channel impulse response group that needs to be fed back includes an $(s_1 2^{t1} + 1)^{th}$ channel impulse response tap and an $(s_2 2^{t2})^{th}$ channel impulse response tap that are in the channel impulse response window, and all channel impulse response taps between the $(s_1 2^{t1} + 1)^{th}$ channel impulse response tap and the $(s_2 2^{t2})^{th}$ channel impulse response tap. $s_1$ and $s_2$ are positive integers, and $t_1$ and $t_2$ are positive integers. The first terminal apparatus may further send first channel impulse response information. The first channel impulse response information is the one or more channel impulse response groups that are indicated by the first indication information and that need to be fed back.

According to the method shown in the first aspect, the first terminal apparatus may determine, based on the first indication information, the one or more channel impulse response groups that need to be fed back, and send the first channel impulse response information corresponding to the channel impulse response groups that need to be fed back. The first indication information may indicate at least one channel impulse response group that is in the channel impulse response window and that needs to be fed back. Because it does not need to indicate whether all the channel impulse response taps in the channel impulse response window need to be fed back, and the channel impulse response tap that needs to be fed back is indicated on a per-group basis, indication overheads can be reduced.

In a possible implementation, each channel impulse response group includes $s_2 2^{t2} - s_1 2^{t1}$ channel impulse

response taps. Optionally, $s_2 2^{t2} - s_1 2^{t1}$ is greater than 1.

In a possible implementation, channel impulse response taps in the channel impulse response window include a $1^{st}$ channel impulse response tap and a $(2^K)^{th}$ channel impulse response tap that are in the channel impulse response window, and all channel impulse response taps between the $1^{st}$ channel impulse response tap and the $(2^K)^{th}$ channel impulse response tap, and include $2^K$ channel impulse response taps in total. K is a positive integer greater than 2.

Based on this implementation, flexible grouping setting can be implemented, to support an indication solution of the channel impulse response tap that needs to be fed back in this application.

In a possible implementation, the first channel impulse response information includes a first channel impulse response group, and the first channel impulse response group includes a $(2^{k1} + 1)^{th}$ channel impulse response tap, a $(2^{k2})^{th}$ channel impulse response tap, and all channel impulse response taps between the $(2^{k1} + 1)^{th}$ channel impulse response tap and the $(2^{k2})^{th}$ channel impulse response tap. $k_1$ and $k_2$ are non-negative integers, and $k_1 < k_2 \leq K$.

In a possible implementation, the first indication information corresponds to the first channel impulse response group. Optionally, a correspondence between the first indication information and the first channel impulse response group is included in a correspondence list, and channel impulse response groups included in the list are a part of all channel impulse response groups in the channel impulse response window, to further reduce the indication overheads.

In a possible implementation, the first channel impulse response information further includes a second channel impulse response group, and the second channel impulse response group includes a $(2^{k3} + 1)^{th}$ channel impulse response tap, a $(2^{k4})^{th}$ channel impulse response tap, and all channel impulse response taps between the $(2^{k3} + 1)^{th}$ channel impulse response tap and the $(2^{k4})^{th}$ channel impulse response tap. $k_3$ and $k_4$ are non-negative integers, and $k_3 < k_4 \leq K$.

Based on this implementation, the first channel impulse response information may indicate a plurality of channel impulse response groups. Therefore, in comparison with a solution in which the plurality of channel impulse response groups are separately indicated by using different signaling, indicating the plurality of channel impulse response groups by using same indication information can further reduce the indication overheads.

In a possible implementation, the first indication information corresponds to the first channel impulse response group and the second channel impulse response group.

Based on this implementation, the first indication information corresponds to the plurality of channel impulse response groups that need to be fed back. Optionally, a correspondence between the first indication information, and the first channel impulse response group and the second channel impulse response group is included in a correspondence list, and channel impulse response groups included in the list are a part of all channel impulse response groups in the channel impulse response window, to further reduce the indication overheads.

In a possible implementation, a $1^{st}$ channel impulse response tap in the first channel impulse response information is a $(k_5 2^d + 1)^{th}$ channel impulse response tap in the channel impulse response window, and a last channel impulse response tap in the first channel impulse response information is a $((k_6 + 1)2^d)^{th}$ channel impulse response tap in the channel impulse response window. $d$ is a positive integer, $K > d$, $k_5$ and $k_6$ are non-negative integers, $k_5 \in [0, 2^{K-d} - 1]$, and $k_6 \in [0, 2^{K-d} - 1]$.

Based on this implementation, the first indication information may separately indicate $k_5$ and $k_6$, to indicate a start location and an end location of the channel impulse response group, to reduce indication overheads.

In a possible implementation, the first indication information includes $2(K - d)$ bits, first $K - d$ bits in the first indication information indicate $k_5$, and last $K - d$ bits in the first indication information indicate $k_6$.

According to a second aspect, a communication method is provided. The method may be implemented by a second communication apparatus. The second communication apparatus may be a sensing transmitter or a component of the sensing transmitter. The sensing transmitter may be a terminal device or a network device. The component in this application may include, for example, at least one of a chip, a chip system, a processor, a transceiver, a processing unit, or a transceiver unit. For example, an execution body is the second communication apparatus. The method may be implemented by using the following steps: The second communication apparatus sends first indication information, where the first indication information indicates one or more channel impulse response groups that need to be fed back in a channel impulse response window, and each channel impulse response group that needs to be fed back includes an $(s_1 2^{t1} + 1)^{th}$ channel impulse response tap and an $(s_2 2^{t2})^{th}$ channel impulse response tap that are in the channel impulse response window, and all channel impulse response taps between the $(s_1 2^{t1} + 1)^{th}$ channel impulse response tap and the $(s_2 2^{t2})^{th}$ channel impulse response tap, where $s_1$ and $s_2$ are positive integers, and $t_1$ and $t_2$ are positive integers; and receives first channel impulse response information, where the first channel impulse response information is the one or more channel impulse response groups that are indicated by the first indication information and that need to be fed back.

In a possible implementation, each channel impulse response group includes $s_2 2^{t2} - s_1 2^{t1}$ channel impulse response taps.

In a possible implementation, channel impulse response taps in the channel impulse response window include a $1^{st}$ channel impulse response tap and a $(2^K)^{th}$ channel impulse response tap that are in the channel impulse response window, and all channel impulse response taps between the $1^{st}$ channel impulse response tap and the $(2^K)^{th}$ channel impulse response tap, and include $2^K$ channel impulse response taps in total. K is a positive integer greater than 2.

In a possible implementation, the first channel impulse response information includes a first channel impulse response group, and the first channel impulse response group includes a $(2^{k1} + 1)^{th}$ channel impulse response tap, a $(2^{k2})^{th}$ channel impulse response tap, and all channel impulse response taps between the $(2^{k1} + 1)^{th}$ channel impulse response tap and the $(2^{k2})^{th}$ channel impulse response tap. $k_1$ and $k_2$ are non-negative integers, and $k_1 < k_2 \leq K$.

In a possible implementation, the first indication information corresponds to the first channel impulse response group.

In a possible implementation, the first channel impulse response information further includes a second channel impulse response group, and the second channel impulse response group includes a $(2^{k3} + 1)^{th}$ channel impulse response tap, a $(2^{k4})^{th}$ channel impulse response tap, and all channel impulse response taps between the $(2^{k3} + 1)^{th}$ channel impulse response tap and the $(2^{k4})^{th}$ channel impulse response tap. $k_3$ and $k_4$ are non-negative integers, and $k_3 < k_4 \leq K$.

In a possible implementation, the first indication information corresponds to the first channel impulse response group and the second channel impulse response group.

In a possible implementation, a $1^{st}$ channel impulse response tap in the first channel impulse response information is a $(k_5 2^d + 1)^{th}$ channel impulse response tap in the channel impulse response window, and a last channel impulse response tap in the first channel impulse response information is a $((k_6 + 1)2^d)^{th}$ channel impulse response tap in the channel impulse response window. $d$ is a positive integer, $K > d$, $k_5$ and $k_6$ are non-negative integers, $k_5 \in [0, 2^{K-d} - 1]$, and $k_6 \in [0, 2^{K-d} - 1]$.

In a possible implementation, the first indication information includes $2(K - d)$ bits, first $K - d$ bits in the first indication information indicate $k_5$, and last $K - d$ bits in the first indication information indicate $k_6$.

According to a third aspect, a communication apparatus is provided. The apparatus may implement the method according to any possible design of the first aspect or the second aspect. The apparatus has a function of the first communication apparatus or the second communication apparatus. The apparatus is, for example, a sensing transmitter, a sensing receiver, a component of the sensing transmitter, or a component of the sensing receiver.

In an optional implementation, the apparatus may include modules that perform and that one-to-one correspond to the methods/operations/steps/actions described in any possible implementation of the first aspect or the second aspect. The module may be a hardware circuit, or may be software, or may be implemented by a hardware circuit in combination with software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as or include a sending unit (sometimes also referred to as a sending module). When the transceiver unit implements the receiving function, the transceiver unit may be referred to as or include a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

For example, when the apparatus is configured to perform the method described in any possible implementation of the first aspect or the second aspect, the apparatus may include the communication unit and the processing unit. The processing unit may include the sending unit and/or the receiving unit.

According to a fourth aspect, an embodiment of this application further provides a communication apparatus, including a processor, configured to execute a computer program (or computer executable instructions) stored in a memory. When the computer program (or the computer executable instructions) is executed, the apparatus is enabled to perform the method according to the first aspect, the second aspect, or the possible implementations of the first aspect and the second aspect.

In a possible implementation, the processor and the memory are integrated together.

In another possible implementation, the memory is located outside the communication apparatus.

The communication apparatus further includes a communication interface. The communication interface is used for communication between the communication apparatus and another device, for example, used for data and/or signal sending or receiving. For example, the communication interface may be a transceiver, a circuit, a bus, a module, or another type of communication interface.

According to a fifth aspect, a computer-readable storage medium is provided. The computer-readable storage medium is configured to store a computer program or instructions, and when the computer program or the instructions are run, the method shown in any one of the first aspect, the second aspect, or the possible implementations of the first aspect and the second aspect is implemented.

According to a sixth aspect, a computer program product including instructions is provided. When the computer program product runs on a computer, the method shown in any one of the first aspect, the second aspect, or the possible implementations of the first aspect and the second aspect is implemented.

According to a seventh aspect, an embodiment of this application further provides a communication apparatus, configured to perform the method according to the first aspect, the second aspect, or various possible implementations of the first aspect and the second aspect.

According to an eighth aspect, a chip system is provided. The chip system includes a logic circuit (which may alternatively be understood as that the chip system includes a processor, and the processor may include a logic circuit and the like), and may further include an input/output interface. The input/output interface may be configured to input a message, or may be configured to output a message. The input/output interface may be a same interface, to be specific, a same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending and receiving functions in the method shown in any one of the first aspect, the second aspect, or the possible implementations of the first aspect and the second aspect. The logic circuit may be further configured to transmit a message to the input/output interface, or receive, from the input/output interface, a message from another communication apparatus. The chip system may be configured to implement the method according to any one of the first aspect, the second aspect, or the possible implementations of the first aspect and the second aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a ninth aspect, a communication system is provided. The communication system may include a first communication apparatus and a second communication apparatus, which are separately configured to implement the method according to any one of the first aspect, the second aspect, and the possible implementations of the first aspect and the second aspect.

For technical effect brought by the second aspect to the ninth aspect, refer to the descriptions of the first aspect. Details are not described herein again.

BRIEF DESCRIPTION OF DRAWINGS

FIG. 1 is a diagram of a structure of a star topology according to an embodiment of this application;
FIG. 2 is a diagram of a structure of a point-to-point topology according to an embodiment of this application;
FIG. 3 is a diagram of a CIR window according to an embodiment of this application;
FIG. 4 is a schematic flowchart of a communication method according to an embodiment of this application;
FIG. 5 is a diagram of CIR grouping according to an embodiment of this application;
FIG. 6 is a diagram of a structure of a communication apparatus according to an embodiment of this application;
FIG. 7 is a diagram of a structure of another communication apparatus according to an embodiment of this application; and
FIG. 8 is a diagram of a structure of another communication apparatus according to an embodiment of this application.

DESCRIPTION OF EMBODIMENTS

In this application, "at least one" means one or more, and "a plurality of" means two or more. The term "and/or" describes an association relationship for describing associated objects and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

The technical solutions provided in this application are applicable to a UWB-based wireless personal area network (wireless personal area network, WPAN). For example, a method provided in this application is applicable to institute of electrical and electronics engineers (institute of electrical and electronics engineers, IEEE) 802.15 series protocols, for example, the 802.15.4a protocol, the 802.15.4z protocol, the 802.15.4ab protocol, or a future generation of UWB WPAN standard. Examples are not enumerated herein. The method provided in this application may be further applied to various communication systems, for example, an internet of things (internet of things, IoT) system, vehicle to everything (vehicle to everything, V2X), or a narrowband internet of things (narrowband internet of things, NB-IoT) system, and is applied to a device in the vehicle to everything, an internet of things node, a sensor, or the like in the internet of things, a smart camera, a smart remote control, and a smart water meter or electricity meter in smart home, and a sensor in a smart city. The method provided in this application is also applicable to an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a long term evolution (long term evolution, LTE) system, a 5th generation (5th generation, 5G) communication system, a 6th generation (6th generation, 6G) communication system, or the like.

The following first explains some terms in embodiments of this application.

(1) Sensing may also be referred to as sensing measurement or radio sensing, means that a transmitter and a receiver transmit a signal to implement an objective of discovering a target or determining a target status. UWB sensing means that a station (station, STA) with a UWB signal sensing capability uses a received UWB signal to detect a feature of an expected target in a given environment. For example, the feature includes one or more of a range, a speed, an angle, a motion, existence or proximity, a gesture, and the like. The target includes one or more of an object, a person, an animal, and the like. The environment includes one or more of a room, a house, a vehicle, an enterprise, and the like.

For example, the transmitter may send the UWB signal used for sensing measurement to the receiver, and the receiver may measure the signal to obtain a channel estimation result, for example, a channel impulse response (channel impulse response, CIR). The receiver may perform sensing based on the CIR. Alternatively, the receiver may send the channel estimation result to the transmitter, and the transmitter performs target sensing or target status sensing based on the channel estimation result. For example, the receiver or the transmitter may process the CIR, to determine whether a moving object exists in the environment.

During specific implementation, sensing signals may be sent one by one in a form of a data packet, and therefore, may also be referred to as a sensing packet (sensing packet, SP).

In some embodiments, sensing signals sent in a period of time on a frequency band may be referred to as a sensing fragment (sensing fragment, SF), and each sensing fragment may have one or more sensing packets. It may be understood that, when a quantity of sensing packets in the sensing fragment is determined, the sensing packets may alternatively be the sensing fragment.

In a sensing process, devices participating in sensing include a sensing initiator, a sensing responder, a sensing transmitter, and a sensing receiver.

(2) The sensing initiator (sensing initiator) is also referred to as a sensing initiator device or an initiator, and is a device that initiates a sensing procedure.

(3) The sensing responder (sensing responder) is also referred to as a sensing responder device, a responder device, a responder, or a response device, and is a device that responds to sensing initiated by the sensing initiator and participates in sensing.

(4) The sensing transmitter (sensing transmitter) is also referred to as a transmitting end, and is a device that sends the sensing signal. The sensing signal may be a signal used for sensing measurement.

(5) The sensing receiver (sensing receiver) is also referred to as a receiving end, and is a device that receives the sensing signal. The sensing receiver may measure the sensing signal.

During specific implementation, the sensing initiator may serve as the transmitter, and the sensing responder may serve as the receiver. Alternatively, the sensing initiator may serve as the receiver, and the sensing responder may serve as the transmitter.

The sensing initiator may be a network device or a terminal device, and the sensing responder may be a network device or a terminal device. The network device may include an access network device, a core network (core network, CN) device, and the like. The terminal is connected to a radio access network device in a wireless manner, and the radio access network device is connected to the core network in a wireless or wired manner. The core network device and the radio access network device may be different independent physical devices, functions of the core network device and logical functions of the radio access network device may be integrated into a same physical device, or some functions of the core network device and some functions of the radio access network device may be integrated into one physical device. A wired or wireless manner may be used for connection between terminals and between radio access network devices.

For example, the access network device is an access device used by the terminal to access a communication system in a wireless manner. For example, the radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, a long range radio (long range radio, LoRa) system, or a vehicle-to-everything system, or the like. The radio access network device may alternatively be a module or a unit that completes a part of functions of the base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station, may be a micro base station or an indoor base station, or may be a relay node, a donor node, or the like. A specific technology and a specific device form that are used by the radio access network device are not limited in embodiments of this application. For ease of description, a network device is used as an abbreviation of the radio access network device, and the base station is used as an example of the radio access network device.

The terminal device is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), V2X communication, machine type communication (machine-type communication, MTC), internet of things, virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless sending and receiving function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

(6) The frequency band may refer to a frequency domain range. For example, in a UWB system, a bandwidth of 499.2 MHz may be referred to as a frequency band.

(7) A time unit is a time range determined by duration, for example, a frame, a subframe, a sensing slot, a sensing round, a sensing block, or a symbol. This is not limited in this application. For example, one slot may be duration of 9 microseconds.

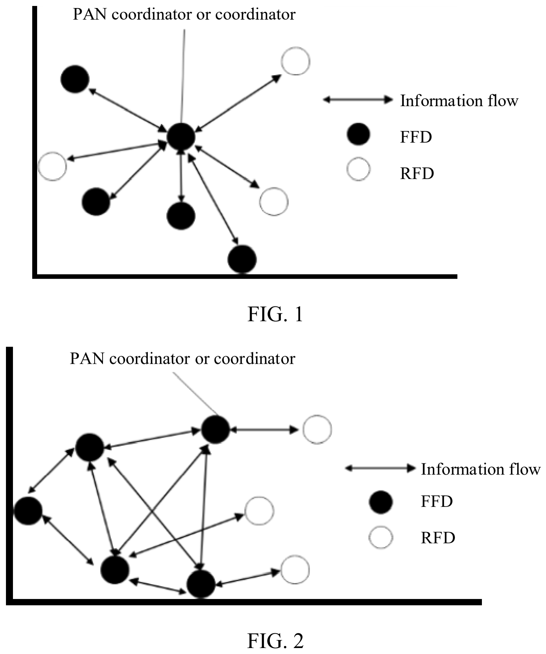

The technical solutions provided in embodiments of this application may operate in a star topology, a point-to-point topology, or a mesh topology. FIG. 1 is a diagram of a star topology according to an embodiment of this application. As shown in FIG. 1, in the star topology, a central node may control data communication between one or more other devices.

It may be understood that a point-to-point topology may be considered as a special mesh topology. The point-to-point topology refers to a structure of data communication between two devices. As shown in FIG. 2, in a mesh topology, data communication may be performed between any two devices.

Optionally, in FIG. 1 or FIG. 2, a black node is a full-function device (full-function device, FFD), and a white node is a reduced-function device (reduced-function device, RFD). In a UWB system, the FFD may be an anchor device, or a label device having a strong computing capability, for example, a UWB label mounted on a smartphone. The RFD is a label device and has only a part of the computing capability. In a possible implementation, the FFD device may serve as a personal area network (personal area network, PAN) coordinator or a coordinator, but the RFD cannot serve as the PAN coordinator or the coordinator.

UWB is a wireless carrier communication technology in which nanosecond-level narrow pulses is used for data transmission. The narrow pulses occupy a wide spectrum range and have extremely low radiation spectrum density. A UWB system has advantages such as high multi-path resolution, low power consumption, and high confidentiality. As the UWB technology is applied in the civil field, ultra-wideband wireless communication has become one of popular physical layer technologies for shortrange and high-speed wireless networks.

Currently, the IEEE association has incorporated the UWB into the IEEE 802 series wireless standards of the IEEE association, and the UWB-based WPAN standard IEEE 802.15.4a and its evolution version IEEE 802.15.4z have been released. In three features of communication, ranging, and sensing, the UWB focuses more on ranging and sensing capabilities, and can use a single waveform to implement ranging while performing sensing.

When the UWB is applied to a sensing technology, when a sensing receiver is a receive device of a UWB signal, the sensing receiver needs to transmit a measurement result of a CIR to a sensing transmitter through an air interface, to feed back a sensing result. In a CIR window-based (or referred to as feedback window-based) CIR feedback mechanism, the sensing receiver may send, to the sensing transmitter based on an indication of a CIR tap that needs to be fed back, the CIR tap that is in a CIR window and that needs to be fed back, to feed back the sensing result. Each CIR tap may indicate a sensing result of a specific time granularity in the CIR window. The indication may indicate the CIR tap that needs to be fed back. Therefore, the sensing receiver may send only the CIR tap that needs to be fed back, and does not need to send a CIR tap other than the CIR tap that needs to be fed back, to reduce overheads. It may be understood that, a time domain granularity of each CIR tap is, for example, 1 nanosecond (ns). The CIR window may include a maximum of 32, 64, 128, or 256 CIR taps. In other words, a length of the CIR window may be 32 ns, 64 ns, 128 ns, or 256 ns.

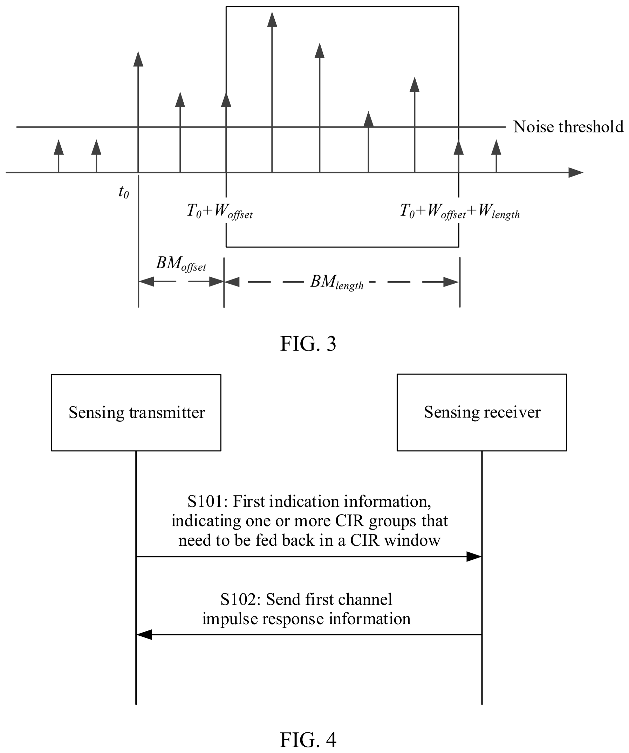

As shown in FIG. 3, $t_0$ represents a reference point, namely, an earliest detected tap (earliest detected tap). The sensing transmitter may indicate a location of the CIR window through $BM_{offset}$ and $BM_{length}$. $BM_{offset}$ represents an interval between a start location of the CIR window and $t_0$. For example, $BM_{offset}$ may indicate a quantity $W_{offset}$ of CIR taps between the start location of the CIR window and $t_0$, and the start location of the CIR window may be denoted as $(t_0 +W_{offset})$. $BM_{length}$ represents a length of the CIR window, for example, indicates a quantity $W_{length}$ of CIR taps between an end location of the CIR window and the start location of the CIR window. Therefore, it may be said that a location of the CIR window starts from $(t_0+W_{offset})$, and ends at $(t_0+W_{offset}+W_{length})$. $W_{offset}$ is the quantity of CIR taps indicated by $BM_{offset}$, and $W_{length}$ is the quantity of CIR taps indicated by $BM_{length}$.

In the CIR window-based CIR feedback mechanism, the sensing transmitter indicates, through signaling, whether each CIR tap is a CIR tap that needs to be fed back by the sensing receiver. For example, the CIR window includes the 256 CIR taps. The sensing transmitter needs to indicate, by using information (for example, a bitmap (bitmap)) with a length of 256 bits, whether each CIR tap needs to be fed back, and indication overheads are excessively high. Each bit corresponds to one CIR tap. For example, when a value of any bit is 1 (or may be 0), it represents that a corresponding CIR tap needs to be fed back. Correspondingly, the sensing receiver sends, to the sensing transmitter, the CIR tap that needs to be fed back.

To reduce the indication overheads of the CIR tap that needs to be fed back, an embodiment of this application provides a communication method. The communication method may be performed by a first communication apparatus and a second communication apparatus. The first communication apparatus may be a sensing receiver or a component of the sensing receiver, and the second communication apparatus may be a sensing transmitter or a component of the sensing transmitter. The component in this application may include, for example, at least one of a chip, a chip system, a processor, a transceiver, a processing unit, or a transceiver unit. It may be understood that the sensing transmitter may be a network device or a terminal device, and the sensing receiver may be a network device or a terminal device.

As shown in FIG. 4, for example, execution bodies are the sensing transmitter and the sensing receiver. The communication method provided in embodiments of this application may include the following steps.

S101: The sensing receiver receives first indication information, where the first indication information indicates one or more CIR groups that need to be fed back in a CIR window. Each CIR group that needs to be fed back includes an $(s_1 2^{t_1} + 1)^{th}$ CIR tap and an $(s_2 2^{t_2})^{th}$ CIR tap that are in the CIR window, and all CIR taps between the $(s_1 2^{t_1} + 1)^{th}$ CIR tap and the $(s_2 2^{t_2})^{th}$ CIR tap. $s_1$ and $s_2$ are positive integers, and $t_1$ and $t_2$ are positive integers.

Correspondingly, the first indication information may be sent by the sensing transmitter.

It can be learned that the CIR taps in the CIR window may be divided into the one or more CIR groups, and each CIR group may include consecutive $s_2 2^{t_2} - s_1 2^{t_1}$ CIR taps. It can be learned from a physical meaning of the CIR tap that a segment of consecutive CIR taps (that is, a plurality of consecutive CIR taps) may reflect information about a target sensed within a given distance. Therefore, during CIR feedback, only the segment of consecutive CIR taps needs to be considered for feedback. A length of the consecutive CIR taps that need to be fed back is related to a distance range in which the target is located. Therefore, in S101, a plurality of consecutive CIR taps may be used as one CIR group, and the first indication information may indicate at least one CIR group that needs to be fed back. Therefore, a feedback of the segment of consecutive CIR taps can be indicated, and indication overheads can be reduced in comparison with a solution of indicating whether each CIR tap needs to be fed back.

The following describes, with reference to examples, several possible grouping manners of all the CIR taps in the CIR window, and manners that are indicated by first indication information corresponding to the grouping manners and that are of CIR groups that need to be fed back.

Example 1: One piece of N-bit data is used as the first indication information, and represents a segment of consecutive CIR taps whose length is an integer power of 2 in the CIR window, and locations of the consecutive CIR taps. The segment of consecutive CIR taps is used as a CIR group that needs to be fed back. In Example 1, a maximum quantity of supported CIR groups is $2^{N-1}$. In other words, the first indication information of the length of N bits may indicate that any CIR group in CIR groups whose quantity does not exceed $2^{N-1}$ is used as the CIR group that needs to be fed back. N is an integer greater than 1.

In a possible implementation of Example 1, when a length of the CIR window is known or a length of the CIR window is given, a quantity of consecutive CIR taps that are fed back may be limited to the integer power of 2, that is, a length of each CIR group may be 1, 2, 4, 8, 16, 32, and the like. It is assumed that the length of the CIR window is L (that is, the CIR window includes L CIR taps). An N-bit binary number k may represent the segment of consecutive CIR taps whose length is the integer power of 2 in the CIR window, and locations of the consecutive CIR taps.

It is assumed that a quantity of all the CIR taps in the CIR window is L, the L CIR taps may be consecutively and evenly divided into $2^g$ CIR groups. Therefore, each CIR group includes $Ng=\dfrac{L}{2^g}CIR$ taps. Specifically, each CIR group or each CIR group that needs to be fed back includes a $(2^{k1} + 1)$th CIR tap and a $(2^{k2})$th CIR tap that are in the CIR window, and all CIR taps between the $(2^{k1} + 1)$th CIR tap and the $(2^{k2})$th CIR tap. $k_1$ and $k_2$ are non-negative integers. It is assumed that L=$2^K$, where $k_1 < k_2 \le K$. In other words, each CIR group includes $2^{k2} - 2^{k1}$ CIR taps.

It may be understood that, for Example 1, $s_1 2^{t1} + 1$ shown in S101 is $2^{k1} + 1$, and $s_2 2^{t2}$ is $2^{k2}$. In other words, $s_1 = s_2 = 1$, $t_1 = k_1$, and $t_2 = k_2$.

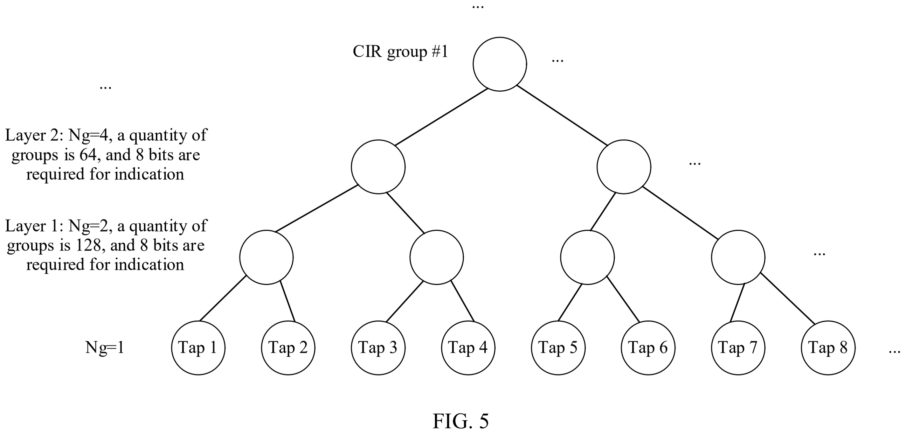

As shown in FIG. 5, the CIR taps in the CIR window may be grouped layer by layer. In addition, each blank circle in FIG. 5 may represent one CIR group, and each CIR group includes a plurality of taps at tap ends. For example, a CIR group #1 includes a CIR tap 1 to a CIR tap 8, which are represented as a tap 1 to a tap 8 in FIG. 5.

Each layer represents different $2^g$, and $2^g$ is a quantity of groups; or may represent different Ng, and Ng is a quantity of CIR taps in each CIR group. When the quantity of groups is 1, that is, grouping is not performed, all the 256 CIR taps are fed back. When the quantity of groups is 2, a 1st group includes a 1st CIR tap to a 128th CIR tap, and a 2nd group includes a 129th CIR tap to a 256th CIR tap. When the quantity of groups is 4, a 1st group includes the 1st CIR tap to a 64th CIR tap, a 2nd group includes a 65th CIR tap to the 128th CIR tap, a 3rd group includes the 129th CIR tap to a 192nd CIR tap, and a 4th group includes the 192nd CIR tap to the 256th CIR tap. The rest may be deduced by analogy.

According to the foregoing grouping manner, all the CIR taps are grouped into $2^g$ groups. Therefore, only g bits are required to indicate a location of each CIR group. Therefore, for the N-bit number k, a binary form of the N-bit number k is k=$[b_{N-1}, b_{N-2},..., b_1, b_0]$, and k may be designed to make $g = \max_{b_n=1} n. \ 2^g$ . $2^g$ may represent the quantity of groups, and binary numbers $[b_{g-1}, b_{g-2},..., b_1, b_0]$ of the g bits may represent the location of the CIR group. In this way, the N-bit number k may represent any segment of groups whose quantity of all CIR groups does not exceed $2^{N-1}$ (that is, the quantity Ng of CIR taps included in each group $\ge \frac{L}{2^{N-1}}$). N is a positive integer.

For example, when each CIR group includes at least Ng=4 CIR taps, and L=256, a location of any CIR group may be indicated by N=7 bits.

In addition, to further reduce feedback overheads, correspondences between CIR groups that need to be indicated and the first indication information may be preset. The CIR groups that need to be indicated in the correspondence may be some of all the CIR groups. There is a one-to-one correspondence between the first indication information and the CIR group that needs to be indicated. In other words, one piece of first indication information may indicate one CIR group that needs to be fed back. For example, as shown in Table 1, each row represents a correspondence between a feedback pattern (feedback pattern) index, and a CIR tap at a start location (start tap) and a CIR tap at an end location (end tap) that are in a CIR group. According to correspondences shown in Table 1, the first indication information may include one or more feedback pattern indexes, and each feedback pattern index may indicate any CIR group in Table 1 as the CIR group that needs to be fed back. When each CIR group includes at least Ng=4 CIR taps, and L=256, only 15 groups are selected from Table 1. Therefore, a maximum of 4 bits are required for feeding back the pattern indexes, so that the indication overheads can be further reduced. In Table 1, an example in which each CIR group includes the at least Ng=4 CIR taps and L=256 is used. Data in the table and a form of the table may be modified based on an actual requirement.

Table 1

| Feedback pattern index | CIR group | |
|---|---|---|
| | Start tap | End tap |
| 0 | 1 | 256 |
| 1 | 1 | 128 |
| 2 | 1 | 64 |
| 3 | 1 | 32 |
| 4 | 129 | 256 |
| 5 | 65 | 128 |
| 6 | 33 | 64 |
| 7 | 129 | 192 |
| 8 | 65 | 96 |
| 9 | 97 | 128 |
| 10 | 193 | 256 |
| 11 | 129 | 160 |

(continued)

| Feedback pattern index | CIR group | |
| --- | --- | --- |
| | Start tap | End tap |
| 12 | 161 | 192 |
| 13 | 193 | 224 |
| 14 | 225 | 256 |

It may be understood that each CIR group in Table 1 includes the start tap, the end tap, and all CIR taps between the start tap and the end tap. The start tap and the end tap represent locations of CIR taps in the CIR window. For example, if the start tap is 1, it represents a $1^{st}$ CIR tap in the CIR window.

Optionally, the correspondence shown in Table 1 may be preconfigured or predefined, or may be determined by the sensing transmitter and the sensing receiver through negotiation (or interaction).

Example 2: One piece of N-bit data is used as the first indication information, and represents a plurality of segments of consecutive CIR taps whose lengths are integer powers of 2 in the CIR window, and locations of the plurality of segments of consecutive CIR taps. The plurality of segments of consecutive CIR taps are used as CIR groups that need to be fed back. In Example 2, the grouping manner described in Example 1 may still be used. For example, a quantity of CIR groups that need to be fed back is 2. A $1^{st}$ CIR group that needs to be fed back includes a $(2^{k1} + 1)^{th}$ CIR tap and a $(2^{k2})^{th}$ CIR tap that are in the CIR window, and all CIR taps between the $(2^{k1} + 1)^{th}$ CIR tap and the $(2^{k2})^{th}$ CIR tap. $k_1$ and $k_2$ are non-negative integers. A $2^{nd}$ CIR group that needs to be fed back includes a $(2^{k3} + 1)^{th}$ CIR tap and a $(2^{k4})^{th}$ CIR tap that are in the CIR window, and all CIR taps between the $(2^{k3} + 1)^{th}$ CIR tap and the $(2^{k4})^{th}$ CIR tap. $k_3$ and $k_4$ are non-negative integers, and $k_3 < k_4 \leq K$. It is assumed that $L=2^K$, where $k_1 < k_2 \leq K$ and $k_3 < k_4 \leq K$. In other words, each CIR group includes $2^{k2} - 2^{k1}$ CIR taps.

For example, when each CIR group includes at least Ng=4 CIR taps, and L=256, the quantity of groups may be 64, and the first indication information may include a plurality of N-bit binary numbers indicating a plurality of CIR groups that need to be fed back.

In example 2, to further reduce feedback overheads, correspondences between CIR groups that need to be indicated and the first indication information may be preset. The CIR groups that need to be indicated in the correspondence may be some of all the CIR groups. There is a one-to-many correspondence between the first indication information and the CIR groups that need to be indicated. In other words, one piece of first indication information may indicate a plurality of CIR groups that need to be fed back.

As shown in Table 2, each row represents a correspondence between a feedback pattern index and one or two CIR groups. Therefore, one feedback pattern index may indicate one or more CIR groups. For example, when the feedback pattern index is 15, it indicates that a CIR group 1 that needs to be fed back is from a $1^{st}$ CIR tap to a $64^{th}$ CIR tap, and a CIR group 2 that needs to be fed back is from a $129^{th}$ CIR tap to a $252^{nd}$ CIR tap. It can be learned that in the example shown in Table 2, a maximum of 4 bits are required to indicate 16 combinations of CIR groups that need to be fed back.

In Table 2, an example in which each CIR group includes the at least Ng=4 CIR taps and L=256 is used. Data in the table and a form of the table may be modified based on an actual requirement.

Table 2

| Feedback pattern index | CIR group 1 | | CIR group 2 | |
| --- | --- | --- | --- | --- |
| | Start tap | End tap | Start tap | End tap |
| 0 | 1 | 256 | n | n |
| 1 | 1 | 128 | n | n |
| 2 | 1 | 64 | n | n |
| 3 | 1 | 32 | n | n |
| 4 | 1 | 16 | n | n |
| 5 | 1 | 8 | n | n |
| 6 | 1 | 4 | n | n |
| 7 | 1 | 32 | 65 | 96 |
| 8 | 1 | 32 | 97 | 128 |

(continued)

| Feedback pattern index | CIR group 1 | | CIR group 2 | |
|---|---|---|---|---|
| | Start tap | End tap | Start tap | End tap |
| 9 | 1 | 32 | 129 | 160 |
| 10 | 1 | 32 | 161 | 192 |
| 11 | 1 | 32 | 193 | 224 |
| 12 | 1 | 32 | 225 | 256 |
| 13 | 1 | 64 | 129 | 192 |
| 14 | 1 | 64 | 193 | 256 |
| 15 | 1 | 64 | 129 | 252 |
| ... | ... | ... | ... | ... |

Similarly to Table 1, each CIR group in Table 2 includes the start tap, the end tap, and all CIR taps between the start tap and the end tap. The start tap and the end tap represent locations of CIR taps in the CIR window. For example, if the start tap is 1, it represents a $1^{st}$ CIR tap in the CIR window.

As shown in Table 2, a start location of each CIR group 1 in Table 2 is 1. This is an optional solution used to simplify design complexity of a feedback pattern. A $1^{st}$ CIR tap that needs to be fed back may be used as the $1^{st}$ CIR tap in the CIR window by designing a value of $BM_{offset}$. For example, a value of $M_{offset}$ shown in FIG. 3 is a quantity of intervals between the $1^{st}$ CIR tap that needs to be fed back and a CIR tap at $t_0$.

Optionally, the correspondence shown in Table 2 may be preconfigured or predefined, or may be determined by the sensing transmitter and the sensing receiver through negotiation (or interaction).

Example 3: The first indication information includes an indication indicating a start location of a CIR tap that needs to be fed back and an indication indicating an end location of a CIR tap that needs to be fed back. Correspondingly, CIR taps that need to be fed back are CIR taps that include the CIR tap at the start location, the CIR tap at the end location, and CIR taps between the start location and the end location. Therefore, these CIR taps are used as a CIR group that needs to be fed back.

In Example 3, it is assumed that a minimum group of CIR taps in the CIR window includes $2^d$ CIR taps, and the CIR window includes $2^K$ CIR taps. A sequential number of a start CIR tap of each CIR group may be denoted as $k_5 2^d + 1$, and a sequential number of an end CIR tap of the CIR group may be denoted as $(k_6 + 1)2^d$. K and $d$ are positive integers, and K > $d$.

It may be understood that, for Example 3, $s_1 2^{t1} + 1$ shown in S101 is $k_5 2^d + 1$, and $s_2 2^{t2}$ is $(k_6 + 1)2^d$. In other words, $s_1 = k_5$, $s_2 = k_6 + 1$, and $t_1 = t_2 = d$.

In Example 3, because each CIR group includes at least $2^d$ CIR taps, there are $2^{1-d}$ possible values for each of $k_1$ and $k_2$, and $k_1 \in [0, 2^{K-d} - 1]$, $k_2 \in [0, 2^{K-d} - 1]$. Therefore, K - $d$ bits may be used to record the start location of each CIR group, and K - d bits may be used to record the end location of each CIR group. In other words, a total of 2(K - d) bits may be required to indicate a start location and an end location of one CIR group. Therefore, the total of 2(K - d) bits may be required to indicate the CIR group.

In a possible implementation of Example 3, the first indication information may include a binary number of the 2(K - $d$) bits. First K - $d$ bits of the binary number indicate $k_5$, and last K - $d$ bits of the first indication information indicate $k_6$. Therefore, it may be determined that a $(k_5 2^d + 1)^{th}$ CIR tap to a $((k_6 + 1)2^d)^{th}$ CIR tap that are in a CIR reference are CIR taps that need to be fed back.

For example, when $d$ = 5, a length of the CIR window is $2^K$=256, only 3 bits are required to indicate the start location of the CIR group, 3 bits indicate the end location of the CIR group, and only 6 bits of information are required to completely indicate a feedback format of a segment of consecutive CIR taps. The first 3 three bits may indicate a sequential number, of a $1^{st}$ CIR tap in the CIR group, in the CIR window, and the last 3 bits may indicate a sequential number, of a last CIR tap in the CIR group, in the CIR window.

Optionally, in Example 3, a value of d may be preconfigured or predefined, or may be determined by the sensing transmitter and the sensing receiver through negotiation (or interaction).

S102: The sensing receiver sends first channel impulse response information, where the first channel impulse response information is the one or more CIR groups that are indicated by the first indication information and that need to be fed back.

Correspondingly, the sensing transmitter may receive the first channel impulse response information, and perform sensing based on the first channel impulse response information.

According to the method shown in FIG. 4, the first indication information needs to indicate only the one or more CIR groups that need to be fed back in the CIR window, and does not need to indicate, for each CIR tap, whether the CIR tap needs to be fed back, thereby reducing the indication overheads.

It may be understood that the first channel impulse response information in S102 may be understood as a set of CIR results that need to be fed back, that is, a set of CIR taps that need to be fed back. For example, the first channel impulse response information includes all CIR taps in the one or more CIR groups that are indicated by the first indication information and that need to be fed back.

For example, for the indication manner shown in Example 1, the first channel impulse response information may include the CIR group corresponding to the first indication information. The CIR group may include the $(2^{k_1} + 1)^{th}$ CIR tap and the $(2^{k_2})^{th}$ CIR tap that are in the CIR window, and all the CIR taps between the $(2^{k_1} + 1)^{th}$ CIR tap and the $(2^{k_2})^{th}$ CIR tap. $k_1$ and $k_2$ are the non-negative integers, and $k_1 < k_2 \leq K$.

For the indication manner shown in Example 2, the first channel impulse response information may include the one or more CIR group corresponding to the first indication information. For example, the first indication information includes two CIR groups, a $1^{st}$ CIR group may include the $(2^{k_1} + 1)^{th}$ CIR tap and the $(2^{k_2})^{th}$ CIR tap that are in the CIR window, and all the CIR taps between the $(2^{k_1} + 1)^{th}$ CIR tap and the $(2^{k_2})^{th}$ CIR tap. $k_1$ and $k_2$ are the non-negative integers, and $k_1 < k_2 \leq K$. A $2^{nd}$ CIR group may include the $(2^{k_3} + 1)^{th}$ CIR tap and the $(2^{k_4})^{th}$ CIR tap that are in the CIR window, and all the CIR taps between the $(2^{k_3} + 1)^{th}$ CIR tap and the $(2^{k_4})^{th}$ CIR tap. $k_3$ and $k_4$ are the non-negative integers.

For the indication manner shown in Example 3, the first channel impulse response information may include the $(k_5 2^d + 1)^{th}$ CIR tap, the $((k_6 + 1)2^d)^{th}$ CIR tap, and the CIR taps between the $(k_5 2^d + 1)^{th}$ CIR tap and the $((k_6 + 1)2^d)^{th}$ CIR tap. $k_5$ and $k_6$ are the non-negative integers, $k_5 \in [0, 2^{K-d} - 1]$, and $k_6 \in [0, 2^{K-d} - 1]$. A quantity of all the CIR taps in the CIR window is $2^K$, K and $d$ are the positive integers, and $K > d$.

Based on a same concept, an embodiment of this application further provides a communication apparatus. The communication apparatus may include corresponding hardware structures and/or software modules for performing the functions shown in the foregoing methods. A person skilled in the art should be easily aware that, in combination with the units and the method steps in the examples described in embodiments disclosed in this application, this application can be implemented by using hardware or a combination of hardware and computer software. Whether a function is performed through hardware or hardware driven by computer software depends on particular application scenarios and design constraint conditions of the technical solutions.

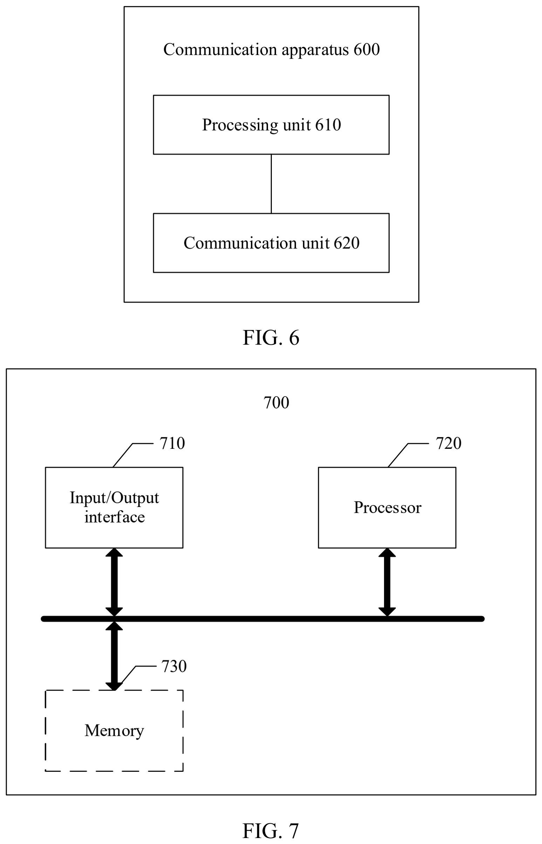

FIG. 6 to FIG. 8 are diagrams of structures of possible communication apparatuses according to embodiments of this application. The communication apparatuses may be configured to implement functions of the sensing transmitter and/or the sensing receiver in the foregoing method embodiments, and therefore can also implement beneficial effect of the foregoing method embodiments. In a possible implementation, the communication apparatus may be a terminal device or a network device. For related details and effect, refer to the descriptions in the foregoing embodiments.

As shown in FIG. 6, the apparatus 600 includes a processing unit 610 and a communication unit 620. The communication unit 620 may implement a corresponding communication function, and the processing unit 610 is configured to process data. The communication unit 620 may include a sending unit and/or a receiving unit. The communication unit 620 may alternatively be a transceiver unit, an input/output interface, or the like. The communication apparatus 600 may be configured to implement functions of the sensing transmitter and/or the sensing receiver in the method embodiment shown in FIG. 2.

For example, when the function of the sensing receiver is implemented, the communication unit 620 may be configured to: receive first indication information, and send first channel impulse response information.

For another example, when the function of the sensing transmitter is implemented, the communication unit 620 may be configured to: send first indication information, and receive first channel impulse response information.

For meanings of the foregoing technologies, refer to the descriptions in the method embodiments. Details are not described again.

It may be further understood that in embodiments of this application, division into modules is an example, and is merely logical function division. During actual implementation, there may be another division manner. In addition, functional modules in embodiments of this application may be integrated into one processor, each module may exist alone physically, or two or more modules may be integrated into one module. The integrated module may be implemented in a form of hardware, or may be implemented in a form of a software function module.

FIG. 7 shows a communication apparatus 700 according to an embodiment of this application. The communication apparatus 700 is configured to implement the communication method provided in this application. The communication apparatus 700 may be a communication apparatus to which the communication method is applied, a component in the communication apparatus, or an apparatus that can be used in a matching manner with the communication apparatus. The communication apparatus 700 may be a sensing transmitter and/or a sensing receiver. The communication apparatus 700 may be a chip system or a chip. In this embodiment of this application, the chip system may include a chip, or may include a chip and another discrete component. The communication apparatus 700 includes at least one processor 720, configured to implement the communication method provided in embodiments of this application. The communication apparatus 700 may further include an input/output interface 710, and the input/output interface may include an input interface and/or an output interface. In this embodiment of this application, the input/output interface 710 may be configured to communicate with another apparatus via a transmission medium, and a function of the input/output interface 710 may include sending and/or receiving. For example, when the communication apparatus 700 is the chip, the communication apparatus 700 performs transmission with another chip or device through the input/output interface 710. The processor 720 may be configured to implement the method shown in the foregoing method embodiments.

For example, the processor 720 may be configured to perform an action performed by the processing unit 610, and the input/output interface 710 may be configured to perform an action performed by the communication unit 620. Details are not described again.

Optionally, the communication apparatus 700 may further include at least one memory 730, configured to store program instructions and/or data. The memory 730 is coupled to the processor 720. The coupling in embodiments of this application may be indirect coupling or a communication connection between apparatuses, units, or modules in an electrical form, a mechanical form, or another form, and is used for information exchange between the apparatuses, the units, or the modules. The processor 720 may cooperate with the memory 730. The processor 720 may execute the program instructions stored in the memory 730. At least one of the at least one memory may be integrated with the processor.

In this embodiment of this application, the memory 730 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of instructions or a data structure and that can be accessed by a computer, but is not limited thereto. The memory in this embodiment of this application may alternatively be a circuit or any other apparatus that can implement a storage function, and is configured to store the program instructions and/or the data.

In this embodiment of this application, the processor 720 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed in embodiments of this application may be directly performed by a hardware processor, or may be performed by using a combination of hardware and software modules in the processor.

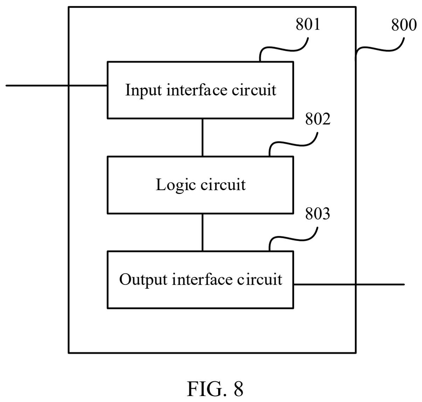

FIG. 8 shows a communication apparatus 800 according to an embodiment of this application. The communication apparatus 800 is configured to implement the communication method provided in this application. The communication apparatus 800 may be a communication apparatus to which the communication method shown in embodiments of this application is applied, a component in the communication apparatus, or an apparatus that can be used in a matching manner with the communication apparatus. The communication apparatus 800 may be a sensing transmitter and/or a sensing receiver. The communication apparatus 800 may be a chip system or a chip. In this embodiment of this application, the chip system may include a chip, or may include a chip and another discrete component. A part or all of the communication method provided in the foregoing embodiments may be implemented by hardware or software. When the communication method is implemented by hardware, the communication apparatus 800 may include an input interface circuit 801, a logic circuit 802, and an output interface circuit 803.

Optionally, an example in which the apparatus is configured to implement functions of a receiver is used. The input interface circuit 801 may be configured to perform a receiving action performed by the communication unit 620, the output interface circuit 803 may be configured to perform a sending action performed by the communication unit 620, and the logic circuit 802 may be configured to perform an action performed by the processing unit 610. Details are not described again.

Optionally, during specific implementation, the communication apparatus 800 may be a chip or an integrated circuit.

Some or all of operations and functions performed by the communication apparatus described in the foregoing method embodiments of this application may be implemented by using the chip or the integrated circuit.

An embodiment of this application provides a computer-readable storage medium storing a computer program. The computer program includes instructions for performing the foregoing method embodiments.

An embodiment of this application provides a computer program product including instructions. When the computer program product runs on a computer, the computer is enabled to perform the foregoing method embodiments.

An embodiment of this application provides a communication system, including a sensing transmitter and a sensing receiver.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

All or some of foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, through a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

It should be noted that a part of this patent application document includes content protected by copyright. Except for making copies of patent documents of the Patent Office or recorded content of patent documents, the copyright owner reserves the copyright.

The communication apparatus in the foregoing apparatus embodiments corresponds to the sensing transmitter and/or the sensing receiver in the method embodiments, and corresponding modules or units perform corresponding steps. For example, the communication unit (transceiver) performs a receiving or sending step in the method embodiments, and a step other than the sending step and the receiving step may be performed by the processing unit (processor). For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, the components may be executed from various computer-readable media that store various data structures. For example, the components may communicate by using a local and/or remote process and based on a signal having one or more data packets (for example, data from two components interacting with another component in a local system, a distributed system, and/or across a network like the Internet interacting with another system by using the signal).

A person of ordinary skill in the art may be aware that, illustrative logical blocks (illustrative logical blocks) and steps (steps) described in combination with embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. When the functions are implemented in a form of software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving first indication information, wherein the first indication information indicates one or more channel impulse response groups that need to be fed back in a channel impulse response window, and each channel impulse response group that needs to be fed back comprises an $(s_1 2^{t1} + 1)^{th}$ channel impulse response tap and an $(s_2 2^{t2})^{th}$ channel impulse response tap that are in the channel impulse response window, and all channel impulse response taps between the $(s_1 2^{t1} + 1)^{th}$ channel impulse response tap and the $(s_2 2^{t2})^{th}$ channel impulse response tap, wherein $s_1$ and $s_2$ are positive integers, and $t_1$ and $t_2$ are positive integers; and
   sending first channel impulse response information, wherein the first channel impulse response information is the one or more channel impulse response groups that are indicated by the first indication information and that need to be fed back.

2. The method according to claim 1, wherein each channel impulse response group comprises $s_2 2^{t2} - s_1 2^{t1}$ channel impulse response taps.

3. The method according to claim 1 or 2, wherein channel impulse response taps in the channel impulse response window comprise a $1^{st}$ channel impulse response tap and a $(2^K)^{th}$ channel impulse response tap that are in the channel impulse response window, and all channel impulse response taps between the $1^{st}$ channel impulse response tap and the $(2^K)^{th}$ channel impulse response tap, and comprise $2^K$ channel impulse response taps in total, wherein K is a positive integer greater than 2.

4. The method according to any one of claims 1 to 3, wherein the first channel impulse response information comprises a first channel impulse response group, and the first channel impulse response group comprises a $(2^{k1} + 1)^{th}$ channel impulse response tap, a $(2^{k2})^{th}$ channel impulse response tap, and all channel impulse response taps between the $(2^{k1} + 1)^{th}$ channel impulse response tap and the $(2^{k2})^{th}$ channel impulse response tap, wherein $k_1$ and $k_2$ are non-negative integers, and $k_1 < k_2 \leq K$.

5. The method according to claim 4, wherein the first indication information corresponds to the first channel impulse response group.

6. The method according to claim 4, wherein
   the first channel impulse response information further comprises a second channel impulse response group, and the second channel impulse response group comprises a $(2^{k3} + 1)^{th}$ channel impulse response tap, a $(2^{k4})^{th}$ channel impulse response tap, and all channel impulse response taps between the $(2^{k3} + 1)^{th}$ channel impulse response tap and the $(2^{k4})^{th}$ channel impulse response tap, wherein $k_3$ and $k_4$ are non-negative integers, and $k_3 < k_4 \leq K$.

7. The method according to claim 6, wherein the first indication information corresponds to the first channel impulse response group and the second channel impulse response group.

8. The method according to any one of claims 1 to 3, wherein
   a $1^{st}$ channel impulse response tap in the first channel impulse response information is a $(k_6 2^d + 1)^{th}$ channel impulse response tap in the channel impulse response window, and a last channel impulse response tap in the first channel impulse response information is a $((k_6 + 1)2^d)^{th}$ channel impulse response tap in the channel impulse response window, wherein d is a positive integer, $K > d$, $k_5$ and $k_6$ are non-negative integers, $k_5 \in [0, 2^{K-d} - 1]$, and $k_6 \in [0, 2^{K-d} - 1]$.

9. The method according to claim 8, wherein the first indication information comprises $2(K - d)$ bits, first $K - d$ bits in the first indication information indicate $k_5$, and last $K - d$ bits in the first indication information indicate $k_6$.

10. A communication method, comprising:

sending first indication information, wherein the first indication information indicates one or more channel impulse response groups that need to be fed back in a channel impulse response window, and each channel impulse response group that needs to be fed back comprises an $(s_1 2^{t1} + 1)^{th}$ channel impulse response tap and an $(s_2 2^{t2})^{th}$ channel impulse response tap that are in the channel impulse response window, and all channel impulse response taps between the $(s_1 2^{t1} + 1)^{th}$ channel impulse response tap and the $(s_2 2^{t2})^{th}$ channel impulse response tap, wherein $s_1$ and $s_2$ are positive integers, and $t_1$ and $t_2$ are positive integers; and

receiving first channel impulse response information, wherein the first channel impulse response information is the one or more channel impulse response groups that are indicated by the first indication information and that need to be fed back.

11. The method according to claim 10, wherein each channel impulse response group comprises $s_2 2^{t2} - s_1 2^{t1}$ channel impulse response taps.

12. The method according to claim 10 or 11, wherein channel impulse response taps in the channel impulse response window comprise a $1^{st}$ channel impulse response tap and a $(2^K)^{th}$ channel impulse response tap that are in the channel impulse response window, and all channel impulse response taps between the $1^{st}$ channel impulse response tap and the $(2^K)^{th}$ channel impulse response tap, and comprise $2^K$ channel impulse response taps in total, wherein K is a positive integer greater than 2.

13. The method according to any one of claims 10 to 12, wherein the first channel impulse response information comprises a first channel impulse response group, and the first channel impulse response group comprises a $(2^{k1} + 1)^{th}$ channel impulse response tap, a $(2^{k2})^{th}$ channel impulse response tap, and all channel impulse response taps between the $(2^{k1} + 1)^{th}$ channel impulse response tap and the $(2^{k2})^{th}$ channel impulse response tap, wherein $k_1$ and $k_2$ are non-negative integers, and $k_1 < k_2 \le K$.

14. The method according to claim 13, wherein the first indication information corresponds to the first channel impulse response group.

15. The method according to claim 13, wherein
the first channel impulse response information further comprises a second channel impulse response group, and the second channel impulse response group comprises a $(2^{k3} + 1)^{th}$ channel impulse response tap, a $(2^{k4})^{th}$ channel impulse response tap, and all channel impulse response taps between the $(2^{k3} + 1)^{th}$ channel impulse response tap and the $(2^{k4})^{th}$ channel impulse response tap, wherein $k_3$ and $k_4$ are non-negative integers, and $k_3 < k_4 \le K$.

16. The method according to claim 15, wherein the first indication information corresponds to the first channel impulse response group and the second channel impulse response group.

17. The method according to any one of claims 10 to 12, wherein
a $1^{st}$ channel impulse response tap in the first channel impulse response information is a $(k_6 2^d + 1)^{th}$ channel impulse response tap in the channel impulse response window, and a last channel impulse response tap in the first channel impulse response information is a $((k_6 + 1)2^d)^{th}$ channel impulse response tap in the channel impulse response window, wherein d is a positive integer, $K > d$, $k_5$ and $k_6$ are non-negative integers, $k_5 \in [0, 2^{K-d} - 1]$, and $k_6 \in [0, 2^{K-d} - 1]$.

18. The method according to claim 17, wherein the first indication information comprises $2(K - d)$ bits, first $K - d$ bits in the first indication information indicate $k_5$, and last $K - d$ bits in the first indication information indicate $k_6$.

19. A communication apparatus, comprising a processor, wherein the processor is configured to execute a computer program or instructions, to implement the method according to any one of claims 1 to 18.

20. The apparatus according to claim 19, further comprising a memory and/or a transceiver, wherein the memory is configured to store the computer program or the instructions, and the transceiver is used by the apparatus to perform communication.

21. A computer-readable storage medium, wherein the storage medium stores a computer program or instructions, and when the computer program or the instructions are executed by a communication apparatus, the method according to any one of claims 1 to 18 is implemented.

22. A communication system, comprising a communication apparatus configured to perform the method according to any one of claims 1 to 9 and a communication apparatus configured to perform the method according to any one of claims 10 to 18.

FIG. 1

FIG. 2

$t_0$

$T_0 + W_{offset}$

$T_0 + W_{offset} + W_{length}$

Noise threshold

$BM_{offset}$

$BM_{length}$

## FIG. 3

| Sensing transmitter | | Sensing receiver |

S101: First indication information, indicating one or more CIR groups that need to be fed back in a CIR window

S102: Send first channel impulse response information

## FIG. 4

...

CIR group #1 ...

...

Layer 2: Ng=4, a quantity of
groups is 64, and 8 bits are
required for indication

...

Layer 1: Ng=2, a quantity of
groups is 128, and 8 bits are
required for indication

...

Ng=1   Tap 1   Tap 2   Tap 3   Tap 4   Tap 5   Tap 6   Tap 7   Tap 8   ...

FIG. 5

Communication apparatus 600

Processing unit 610

Communication unit 620

FIG. 6

700

710

Input/Output interface

720

Processor

730

Memory

FIG. 7

FIG. 8

## INTERNATIONAL SEARCH REPORT

| International application No. |
| --- |
| **PCT/CN2024/085169** |

### A.    CLASSIFICATION OF SUBJECT MATTER

H04W24/10(2009.01)i

According to International Patent Classification (IPC) or to both national classification and IPC

### B.    FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNKI, IEEE, CNTXT, DWPI, ENTXT, ENTXTC, VEN: 超宽带, 脉冲响应, 冲击响应, 抽头, 反馈, 感知, 组, 集, 群, 响应, 信道, 信道冲击响应, 分组, 指示, CIR, feedback, sensing, tap, UWB, group, set, feedback, pattern, indicate

### C.    DOCUMENTS CONSIDERED TO BE RELEVANT

| Category* | Citation of document, with indication, where appropriate, of the relevant passages | Relevant to claim No. |
| --- | --- | --- |
| X | QIAN, Bin et al. "CIR feedback scheme for UWB sensing"<br>*doc. IEEE 15-22-0155-00-04ab*, 09 March 2022 (2022-03-09),<br>pp. 5-15 | 1-22 |
| A | CN 114978377 A (DATANG MOBILE COMMUNICATIONS EQUIPMENT CO., LTD.) 30 August 2022 (2022-08-30)<br>entire document | 1-22 |
| A | US 2021175949 A1 (NOKIA TECHNOLOGIES OY) 10 June 2021 (2021-06-10)<br>entire document | 1-22 |
| A | US 2022171046 A1 (ROBERT BOSCH GMBH) 02 June 2022 (2022-06-02)<br>entire document | 1-22 |
| A | WO 2021237564 A1 (SZ DJI TECHNOLOGY CO., LTD.) 02 December 2021 (2021-12-02)<br>entire document | 1-22 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 July 2024** | **17 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2024/085169**

| Patent document cited in search report | | | Publication date (day/month/year) | Patent family member(s) | | | Publication date (day/month/year) |
|---|---|---|---|---|---|---|---|
| CN | 114978377 | A | 30 August 2022 | None | | | |
| US | 2021175949 | A1 | 10 June 2021 | EP | 3776897 | A1 | 17 February 2021 |
| | | | | WO | 2019196121 | A1 | 17 October 2019 |
| US | 2022171046 | A1 | 02 June 2022 | US | 20210409067 | A1 | 30 December 2021 |
| | | | | CN | 113852907 | A | 28 December 2021 |
| | | | | JP | 2022008261 | A | 13 January 2022 |
| | | | | KR | 20220000843 | A | 14 January 2022 |
| WO | 2021237564 | A1 | 02 December 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310454036